# EUROPEAN PATENT SPECIFICATION

(11) **EP 3 345 031 B1**
(45) Date of publication and mention of the grant of the patent: **02.11.2022**
(21) Application number: 16774862.3
(22) Date of filing: 01.09.2016
(51) Int. Cl.: G02B 21/00, G01J 3/42, G01J 3/44, G01J 3/28

(54) **A CALIBRATION DEVICE FOR TWO- OR MULTI-PHOTON ABSORPTION EVENTS AND A METHOD FOR CALIBRATING A LASER-SCANNING MICROSCOPE**
KALIBRIERVORRICHTUNG FÜR ZWEI- ODER MEHRPHOTONEN-ABSORPTIONSEREIGNISSE UND VERFAHREN ZUM KALIBRIEREN EINES LASERRASTERMIKROSKOPS
DISPOSITIF D'ÉTALONNAGE POUR ÉVÉNEMENTS D'ABSORPTION À DEUX PHOTONS OU MULTI-PHOTONS ET PROCÉDÉ D'ÉTALONNAGE D'UN MICROSCOPE À BALAYAGE LASER

(30) Priority: 01.09.2015 EP 15183349
(43) Date of publication of application: 11.07.2018
(73) Proprietor: Leica Microsystems CMS GmbH, 35578 Wetzlar (DE)
(72) Inventor: KRISHNAMACHARI, Vishnu Vardhan, 64625 Bensheim (DE)
(74) Representative: Schaumburg und Partner Patentanwälte mbB
(86) International application number: PCT/EP2016/070657
(87) International publication number: WO 2017/037199

(56) References cited:
- EP-A1- 1 918 752
- US-A1- 2003 155 482
- US-B1- 6 356 381
- JINENDRA K. RANKA ET AL: "Autocorrelation measurement of 6-fs pulses based on the two-photon-induced photocurrent in a GaAsP photodiode", OPTICS LETTERS, vol. 22, no. 17, 1 September 1997 (1997-09-01), page 1344, XP055326408, US ISSN: 0146-9592, DOI: 10.1364/OL.22.001344
- Hamamatsu: "GaAsP photodiode Diffusion type Photodiode for visible light detection", , 31 May 2012 (2012-05-31), pages 1-5, XP055326463, Retrieved from the Internet: URL:https://www.hamamatsu.com/resources/pd f/ssd/g1115_etc_kgpd1002e.pdf [retrieved on 2016-12-06]

## Description

The present invention describes a solution for various calibration procedures for two-photon, multi-photon, second-harmonic generation, third harmonic generation imaging, in particular in a single-color or multi-color multi-photon laser-scanning or stage-scanning microscope. The present invention further relates to a calibration device for using the two-photon-absorption effect in a large-area semi-conductor photodiode for various calibration procedures in a single-color or multi-color multi-photon laser-scanning or stage-scanning microscope.

Laser-scanning or stage-scanning multi-photon microscopy is a common technique that is regularly used, e.g., for deep-tissue imaging, second-harmonic generation imaging, and third-harmonic generation imaging. Of late, multi-photon microscopes with multi-color laser sources are, amongst others, used for generation of coherent anti-Stokes Raman scattering (CARS), coherent Stokes Raman scattering (CSRS), stimulated Raman scattering (SRS), two-color two-photon absorption imaging, two-color two-photon fluorescence imaging.

All these techniques (both single-color and multi-color techniques), rely on high peak-powers for the generation of respective non-linear optical signals. Assuming that the laser excitation matches with the corresponding molecular levels (electronic or vibrational), the generated signals are strong, if either both the conditions below are met: (i) The used laser operates in pulsing mode and not in continuous-wave (CW) mode. (ii) Laser pulses corresponding to the two colors (or multiple colors) arrive at the sample simultaneously or with a certain predetermined time delay.

One aspect which is particularly important for short pulse (fs, ps) (femtosecond, picosecond) excitation in laser scanning microscopes is the chromatic temporal delay of the pulses of various colors arriving at different regions of the sample. As the focused laser beams are scanned across the sample, they experience different amounts of optical thickness depending whether they are impinged on the sample close to the optical axis or away from the optical axis. If a particular imaging modality requires multi-color excitation, it is important to determine the variation in the temporal delay of pulses of different colors as a function of the position of incidence of the focused spot with respect to the optical axis.

This is especially critical for large numerical aperture objectives (which have large amount of glass material with varying glass thicknesses away from optical axis) and short excitation pulse (for example pulse width <= 150 fs). In such a scenario, if the imaging optics is not designed optimally, one would observe a convex nonlinear intensity distribution in the obtained image - with strong signals in the center of the field of view and continuously deteriorating signal intensity away from the central field of view. One way to correct for this non-uniformity in signal efficiency is to adjust the optical delay as a function of the position of the laser focus using a pre-calibrated two-dimensional matrix (delay matrix).

For determining the values of the delay matrix, a highly efficient and accurate calibration device is required. It is known that semiconductor devices demonstrate two-photon effect with strong .laser pulses. Literature has been published on two-photon absorption in light-emitting diodes (LEDs) and photo-diodes (PDs) especially for auto-correlation measurements (Reid et al., "Lightemitting diodes as measurement devices for femtosecond laser pulses", Optics Letters 22, 233 - 235 (1997); Ranka et al., "Autocorrelation measurement of 6-fs pulses based on the twophoton-induced photocurrent in a GaAsP photodiode", Optics Letters 22,1344-1346 (1997); Hellerer, "CARS-Mikroskopie: Entwicklung und Anwendung", dissertation (2004); US 6195167 B1; US 8610996 B2).

US 2003/0155482 A1 discloses a microscope having a detector. The detector is embodied as a semiconductor detector and used for the determination of a time defined pulse width. In a first embodiment a partial light beam is split from a light beam used for illuminating a sample and directed onto the detector. In a second embodiment the main light beam is directed onto the detector after passing the sample.

It is an object of the invention as defined in claim 1 to provide a new type of calibration device based on two-photon absorption for several imaging and/or spectroscopy techniques being embodied as a large-area semi-conductor device, e.g., a large-area photodiode. Advantageously, the form-factor of the calibration device is similar or equal to that of a microscope slide for easy mounting.

It is further an object of the invention as defined in claim to provide a method for calibrating a laser-scanning microscope for several imaging and/or spectroscopy techniques using a calibration device based on two-photon absorption.

According to a preferred embodiment of the present invention there is provided a device for a calibration procedure (calibration device), in particular for at least one of the following: twophoton imaging, multi-photon imaging, two-photon microscopy, multi-photon microscopy, second-harmonic generation imaging, third harmonic generation imaging, coherent anti-Stokes Raman scattering (CARS), coherent Stokes Raman scattering (CSRS), stimulated Raman scattering (SRS), two-color two-photon absorption imaging or two-color two-photon fluorescence imaging. In particular, the calibration device can be used for calibrating a laser-scanning or stage-scanning microscope based on these imaging techniques. The calibration device comprises at least one detector and at least one holder for the at least one detector. The at least one detector is a semi-conductor device having an extended light-sensitive detection area. The extended light-sensitive detection area might comprise a semiconductor material. The extended light-sensitive detection area is larger than 1 mm in a first direction and larger than 1 mm in a second direction, the second direction being perpendicular to the first direction. The extended light-sensitive detection area is adapted such that the two-photon, multi-photon, second-harmonic generation or third harmonic generation is excited and/or induced therein and wherein the excited and/or induced effect is detected therewith.

The advantage of a photo-diode based two-photon absorption over LED-based devices is that photo-diodes can be produced with a large surface area. Furthermore, it is possible to improve their temporal response using large reverse-bias across its p-n junction.

In particular, for laser scanning microscopy, it is advantageously possible with this approach to directly use the semiconductor portion of a large area detector device as the material in which the two-photon, multi-photon, second-harmonic generation or third harmonic generation is excited and/or induced and as the detector of the excited and/or induced effect, instead of using a microscopic calibration object having e.g. fluorescent material being suitable for the excitation of two-photon or multi-photon light which then is measured with a separate conventional detection device.

For example, a Gallium-Arsenide-Phosphide (GaAsP) photodiode can be chosen as a detector for detecting light. Typical values for the size of the detection area of such a GaAsP photodiode are between 1 mm² and 50 mm², e.g., 2.7 mm × 2.7 mm or 5.6 mm × 5.6 mm. Other suitable large area detectors might be used. As stated above, preferably the extended light-sensitive detection area (active area) should be larger than 1 mm in a first direction and larger than 1 mm in a second direction, the second direction being perpendicular to the first direction. The shape of the extended light-sensitive detection area can be any two-dimensional shape, e.g. a square, a rectangle, a polygon, a circle or an ellipse. An additional advantage of this device is that its active area is very close to the upper surface of its packaging which makes it easy for mounting on a holder with a form-factor similar to that of a microscope slide. One could, after mounting the photodiode in such a holder, cover it with a regular microscope cover slip. This ensures that the test/calibration conditions are very similar to that of regular microscopic imaging conditions.

In particular, if two-color multi-photon effects are to be investigated by using light from two pulsed laser light beams of different wavelengths in a wavelength range of 680 nm to 1300 nm, the two-color two-photon absorption signal from this photodiode can be measured by simply impinging the two pulsed laser light beams on the diode and measuring the resulting current/voltage which is induced by the two-photon absorption effect. The temporal response of the diode can be improved by applying a reverse bias of up to 5 V. The signal could also be amplified electronically using a fixed gain or variable gain electronic circuits/devices.

For the calibration process using the calibration device according to this invention, the detector of the calibration device is (via an A/D converter) connected to least one evaluation device, e.g., a microprocessor, FPGA (Field Programmable Gate Array), and/or computer. The electrical signal of the calibration device is used by this at least one evaluation device to optimize the settings of a laser beam-modifying device of the microscope (either software or hardware based). Typically, the attempt is made to optimize the settings of one or more beam-modifying devices (like lasers, scanner, auto-focus system, variable beam expander, beam catcher, objective) in such a way that the intensity of the signal generated by the calibration device (and therefore also the number of two- or multi-photon absorption events) is maximized. For example, in case of a multiphoton or CARS/CSRS/SRS microscope utilizing two pulsed lasers, where one of the laser beams runs through a delay stage, the intensity of the signal generated by the calibration device can be measured and maximized for specific laser wavelengths and settings of the scanner by optimizing the settings of the delay stage. (Here, a so-called delay stage is an optical device situated in a beam path, often utilizing mirrors, that delays the laser pulses of a pulsed laser for a modifiable amount of time relative to the laser pulses of another pulsed laser, typically by making the length of the beam path variable.) This optimization is performed in such a way that for specific laser wavelengths and settings of the scanner a so-called delay matrix is recorded, which contains values for the settings of the delay stage as a function of the position of the laser focus. During the scan process when imaging a sample, this delay matrix is used to dynamically adjust the delay stage according to the pre-calibrated optimal settings stored in the delay matrix.

Furthermore, due the large active area of this diode, the focused light spot of the laser scanning microscope at the object plane - when the scanning process is active - can be impinged on this diode and the resulting signal can be mapped to a regular multi-photon image using a proper image evaluation software. The contrast in the image reflects the strength of the two-photon absorption signal. Thus one could calibrate the efficiency of the microscope imaging setup. Alternatively, one could also measure the signal generated by the calibration device at a limited number of regions or points in the field of view (for example only at one point, e.g., the center of the field of view) by parking the laser beams at a limited set of points (using the scanner). This could, for example, be used for quick calibration.

Preferably, a calibration device according to the present invention should simulate regular imaging conditions, i.e., it should not contain extra dispersive material such as glass/non-linear crystals which could effectively introduce additional temporal delay and hence falsifying the calibration. Advantageously, a calibration device according to the present invention may have a large area with uniform two-photon absorption signal generation efficiency and it should be sensitive to a broad range of typical multi-photon excitation wavelengths ranging from 680 nm to 1300 nm.

Preferably, such a calibration device is compact and can be easily mounted on a microscope stage. The holder has a shape being identical to an object slide being mountable on a microscope stage of a microscope.

Alternatively or additionally, with its compact form, a calibration device according to the invention could be placed conveniently anywhere along the illumination beam path, e.g., for easy additional diagnostic purposes. Particularly, the device could be adaptable in an object plane and/or in an intermediate image plane and/or in an image plane and/or in a pupil plane of a microscope. One could also place near the exit aperture of the laser. Under certain (unstable) operating conditions, some of the multi-photon excitation lasers stop emitting pulses and switch to CW mode with similar average power. Under these conditions, it would be very difficult differentiate with the help of a simple laser power meter whether the laser is pulsing or not. With a two-photon absorption detector as described above, one would measure a strong two-photon signal when the laser is pulsing and no signal when the laser switches to CW mode.

Thus this device could be easily employed for laser diagnostic purposes.

With no additional dispersive elements in the detector unit, one can directly correlate the calibration performed with this device without any further corrections.

The calibration method/procedure for calibrating a laser-scanning microscope according to the present invention is based on the usage of a calibration device according to at least one of the claims 1 to 4.

A person skilled in the art working in the field of the present invention will be able to - with the knowledge of the device features of the present invention described above - embellish the method steps to operate the inventive calibration device described above accordingly. Therefore, in order to avoid repetition, reference is made to the previous part of the description.
Fig. 1 shows schematically a microscope with a calibration device according to the invention.
Fig. 2A shows schematically a holder for the detector for calibration purposes (top view).
Fig. 2B shows schematically a holder for the detector for calibration purposes (side view).

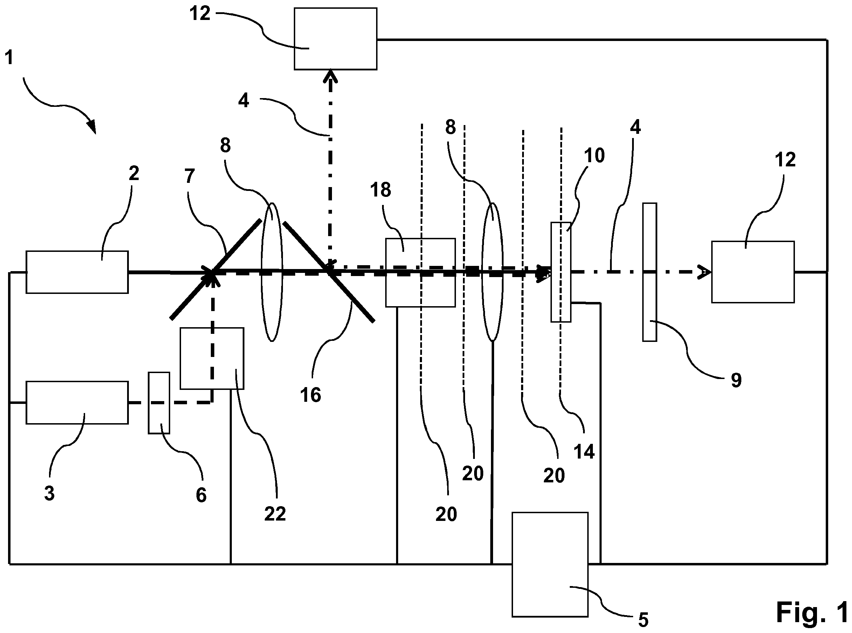

Fig. 1 shows a schematic view of a general laser-scanning microscope 1, possibly capable of several imaging and/or spectroscopy techniques, like multi-photon, CARS or SRS microscopy, and applying a calibration device 10 according to the invention. Two or more lasers (2, 3) generate laser beams, which are merged for example by a dichroic mirror 7. Through a scanner 18 and one or more optical systems 8 (which may include, e.g., lenses and/or mirrors and/or filters and/or a beam catcher and/or a variable beam expander and/or an objective and/or an autofocus system, and may be situated at various locations along the illumination beam path, e.g., before and/or after the scanner as indicated in Fig. 1) the laser beams impinge the sample, which is placed in an object plane 14. The scanner 18 is used to scan the laser beams across the sample. One or more detectors 12 (potentially including additional electronics) are used to detect photons emerging from the sample, e.g., fluorescence light (e.g., for multi-photon microscopy) or light resulting from non-linear interactions (e.g., for CARS, SRS). Depending on the purpose of the microscope, filters 9 and/or dichroic mirrors 16 can be used to further filter the light which is wanted for detection. For calibration purposes, a calibration device 10 according to the invention (comprising at least one detector) is placed instead of the sample on the microscope stage of the microscope. Alternatively, the calibration device 10 could be placed anywhere along the illumination beam path, for example in an intermediate image plane and/or in an image plane and/or in a pupil plane of a microscope (exemplary positions are indicated as dashed lines 20). Electrical signals from the detectors 12 as well as the detector of the calibration device 10 are evaluated by at least one evaluation device 5 (e.g., a microprocessor, FPGA, computer). The generated signal of the calibration device can be used to optimize the settings of the delay stage 22, but also other usages of the signal are possible: For example, based on the generated signal the laser intensities of the lasers 2, 3, the scanner 18, the settings of the optical system 8 (e.g., an auto-focus system, a variable beam expander, a beam catcher or an objective) could be altered. Principally, based on the generated signal any beam modifying device of the microscope can be optimized for the desired imaging technique if regulation of this device is possible.

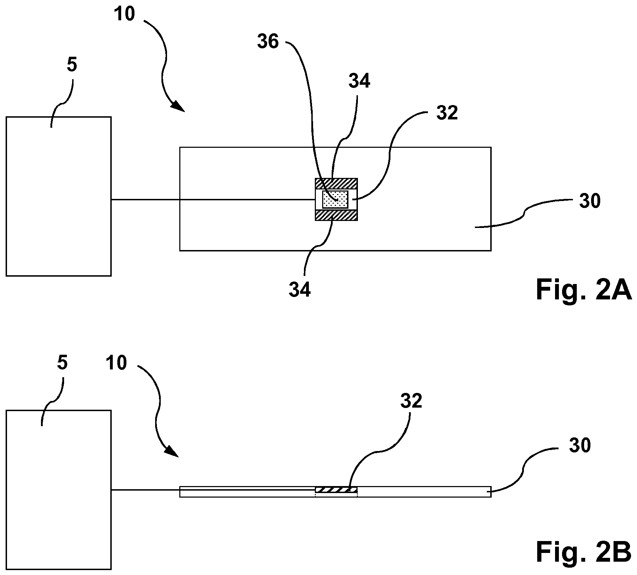

Fig. 2A shows a schematic top view of a calibration device 10 according to the invention, comprising at least one detector 32, e.g., a GaAsP photodiode, and at a holder 30. The holder 30 has the shape of an object slide and is mountable on a microscope stage of a microscope and consists, e.g., of metal like aluminum or plastic. The detector 32 might be placed in an opening of the holder 30. In this case, recesses 34 might be present for easy exchangeability of the detector 32. Alternatively, the detector 32 is placed on top of the holder 30. The detector 32 comprises an extended light-sensitive detection area 36, which might comprise a semiconductor material. The detector 32 is connected to an evaluation device 5 (e.g., a microprocessor, an FPGA, a computer, or similar in combination with an A/D converter) for processing of the electrical signals from the detector 32.

Fig. 2B shows a schematic side view of the same holder of Fig. 2A.

Finally, it is particularly pointed out that the above-described embodiments serve merely to describe the claimed teaching, but do not limit the scope of protection to the described embodiments. In particular, a person skilled in the art (eventually with the help of his general knowledge) would regard all features included in this specification and/or their functions, effects and properties - individually and/or in combination with each other - to be disclosed herein, in order to provide a solution to the objective problem or related problems.

## Claims

1. Calibration device for a calibration procedure for at least one of the following: two-photon imaging, multi-photon imaging, two-photon microscopy, multi-photon microscopy, second-harmonic generation imaging, third harmonic generation imaging, coherent anti-Stokes Raman scattering (CARS), coherent Stokes Raman scattering (CSRS), stimulated Raman scattering (SRS), two-color two-photon absorption imaging or two-color twophoton fluorescence imaging;
wherein the device (10) comprises at least one detector (32) and at least one holder (30) for holding the at least one detector (32), the at least one detector (32) being a semi-conductor device having an extended light-sensitive detection area (36) comprising a semiconductor material, the extended light-sensitive detection area (36) being larger than 1 mm in a first direction and larger than 1 mm in a second direction, the second direction being perpendicular to the first direction,
wherein the extended light-sensitive detection area is adapted such that the two-photon, multi-photon, second-harmonic generation or third harmonic generation is excited and/or induced therein and wherein the excited and/or induced effect is detected therewith, **characterized in that**
the holder (30) is adapted such that it can be mounted onto a microscope (1) and the holder (30) has a shape being identical to an object slide being mountable on a microscope stage of said microscope, and that
the device (10) comprises an evaluation device configured to determine a delay matrix, which contains values for settings of a delay stage of the microscope as a function of the position of the laser focus in the field of view of the microscope based on an electrical signal of the at least one detector (32), the delay stage being configured to delay laser pulses.

2. Calibration device of claim 1, wherein the device is adaptable in an object plane (14) and/or in an intermediate image plane (20) and/or in an image plane (20) and/or in a pupil plane (20) of a microscope.

3. Calibration device of claim 1 or 2, wherein the extended light-sensitive detection area (36) comprises a two-dimensional shape, the two-dimensional shape preferably being a square, a rectangle, a polygon, a circle or an ellipse.

4. A method for calibrating a laser-scanning microscope for at least one of the following:
two-photon imaging, multi-photon imaging, two-photon microscopy, multi-photon microscopy, second-harmonic generation imaging, third harmonic generation imaging, coherent anti-Stokes Raman scattering (CARS), coherent Stokes Raman scattering (CSRS), stimulated Raman scattering (SRS), two-color two-photon absorption imaging or two-color twophoton fluorescence imaging or any other non-linear light induced effect;
wherein a calibration device (10) is used comprising at least one detector (32) and at least one holder (30) for holding the at least one detector (32), the at least one detector (32) being a semi-conductor device having an extended light-sensitive detection area (36) comprising a semiconductor material, the extended light-sensitive detection area (36) being larger than 1 mm in a first direction and larger than 1 mm in a second direction, the second direction being perpendicular to the first direction,
wherein the extended light-sensitive detection area is adapted such that the two-photon, multi-photon, second-harmonic generation or third harmonic generation is excited and/or induced therein and wherein the excited and/or induced effect is detected therewith, **characterized in that**
the holder (30) is adapted such that it can be mounted onto a microscope (1) and the holder (30) has a shape being identical to an object slide being mountable on a microscope stage of said microscope, and that
a delay matrix is determined, which contains values for settings of a delay stage (22) of the microscope (1) as a function of the position of the laser focus in the field of view of the microscope (1) based on an electrical signal of the at least one detector (32), the delay stage (22) being configured to delay laser pulses.

5. Method of claim 4, wherein the calibration device (10) is adaptable in an object plane (14) and/or in an intermediate image plane (20) and/or in an image plane (20) and/or in a pupil plane (20) of a microscope.

6. Method of claim 4 or 5, wherein the extended light-sensitive detection area (36) comprises a two-dimensional shape, the two-dimensional shape preferably being a square, a rectangle, a polygon, a circle or an ellipse.

## Patentansprüche

1. Kalibriervorrichtung für ein Kalibrierverfahren für mindestens eines der folgenden Verfahren: Zwei-Photonen-Bildgebung, Multiphotonen-Bildgebung, Zwei-Photonen-Mikroskopie, Multiphotonen-Mikroskopie, Frequenzdopplungs-Bildgebung (SHG), Frequenzverdreifachungs-Bildgebung (THG), kohärente Anti-Stokes-Raman-Streuung (CARS), kohärente Stokes-Raman-Streuung (CSRS), stimulierte Raman-Streuung (SRS), Zweifarben-Zwei-Photonen-Absorptions-Bildgebung oder Zweifarben-Zwei-Photonen-Fluoreszenz-Bildgebung;
wobei die Vorrichtung (10) mindestens einen Detektor (32) und mindestens einen Halter (30) zum Halten des mindestens einen Detektors (32) umfasst, wobei der mindestens eine Detektor (32) eine Halbleitervorrichtung mit einem erweiterten lichtempfindlichen Erfassungsbereich (36) ist, der ein Halbleitermaterial umfasst, wobei der erweiterte lichtempfindliche Erfassungsbereich (36) in einer ersten Richtung größer als 1 mm und in einer zweiten Richtung größer als 1 mm ist, wobei die zweite Richtung senkrecht zu der ersten Richtung ist,
wobei der erweiterte lichtempfindliche Erfassungsbereich so angepasst ist, dass der Zwei-Photonen-, MultiPhotonen-, Frequenzverdopplungs- oder Frequenzverdreifachungseffekt darin angeregt und/oder induziert wird und wobei der angeregte und/oder induzierte Effekt damit detektiert wird, **dadurch gekennzeichnet, dass**
der Halter (30) so angepasst ist, dass er auf ein Mikroskop (1) montiert werden kann, und der Halter (30) eine Form hat, die mit einem Objektträger identisch ist, der auf einem Mikroskoptisch des Mikroskops montierbar ist, und dass
die Vorrichtung (10) eine Auswertevorrichtung umfasst, die ausgebildet ist, eine Verzögerungsmatrix zu ermitteln, die Werte für Einstellungen einer Verzögerungsstufe des Mikroskops in Abhängigkeit von der Position des Laserfokus im Sichtfeld des Mikroskops auf der Basis eines elektrischen Signals des mindestens einen Detektors (32) enthält, wobei die Verzögerungsstufe ausgebildet ist, Laserpulse zu verzögern.

2. Kalibriervorrichtung nach Anspruch 1, wobei die Vorrichtung in einer Objektebene (14) und/oder in einer Zwischenbildebene (20) und/oder in einer Bildebene (20) und/oder in einer Pupillenebene (20) eines Mikroskops anpassbar ist.

3. Kalibriervorrichtung nach Anspruch 1 oder 2, wobei der erweiterte lichtempfindliche Erfassungsbereich (36) eine zweidimensionale Form aufweist, wobei die zweidimensionale Form vorzugsweise ein Quadrat, ein Rechteck, ein Polygon, ein Kreis oder eine Ellipse ist.

4. Verfahren zur Kalibrierung eines Laser-Scanning-Mikroskops für mindestens eines der folgenden Verfahren:
Zwei-Photonen-Bildgebung, Multiphotonen-Bildgebung, Zwei-Photonen-Mikroskopie, Multiphotonen-Mikroskopie, Frequenzverdopplungs-Bildgebung (SHG), Frequenzverdreifachungs-Bildgebung (THG), kohärente Anti-Stokes-Raman-Streuung (CARS), kohärente Stokes-Raman-Streuung (CSRS), stimulierte Raman-Streuung (SRS), Zwei-Farben-Zwei-Photonen-Absorptions-Bildgebung, Zwei-Farben-Zwei-Photonen-Fluoreszenz-Bildgebung oder ein anderer nichtlinearer lichtinduzierter Effekt;
wobei eine Kalibriervorrichtung (10) verwendet wird, die mindestens einen Detektor (32) und mindestens einen Halter (30) zum Halten des mindestens einen Detektors (32) umfasst, wobei der mindestens eine Detektor (32) eine Halbleitervorrichtung mit einem erweiterten lichtempfindlichen Erfassungsbereich (36) ist, der ein Halbleitermaterial umfasst, wobei der erweiterte lichtempfindliche Erfassungsbereich (36) in einer ersten Richtung größer als 1 mm und in einer zweiten Richtung größer als 1 mm ist, wobei die zweite Richtung senkrecht zu der ersten Richtung ist,
wobei der erweiterte lichtempfindliche Erfassungsbereich so angepasst ist, dass der Zwei-Photonen-, MultiPhotonen-, Frequenzverdopplungs- oder Frequenzverdreifachungseffekt darin angeregt und/oder induziert wird und wobei der angeregte und/oder induzierte Effekt damit detektiert wird, **dadurch gekennzeichnet, dass** der Halter (30) so angepasst ist, dass er auf ein Mikroskop (1) montiert werden kann, und der Halter (30) eine Form hat, die mit einem Objektträger identisch ist, der auf einem Mikroskoptisch des Mikroskops montierbar ist, und dass
eine Verzögerungsmatrix ermittelt wird, die Werte für Einstellungen einer Verzögerungsstufe (22) des Mikroskops (1) in Abhängigkeit von der Position des Laserfokus im Sichtfeld des Mikroskops (1) auf der Basis eines elektrischen Signals des mindestens einen Detektors (32) enthält, wobei die Verzögerungsstufe (22) ausgebildet ist, Laserimpulse zu verzögern.

5. Verfahren nach Anspruch 4, wobei die Kalibriervorrichtung (10) in einer Objektebene (14) und/oder in einer Zwischenbildebene (20) und/oder in einer Bildebene (20) und/oder in einer Pupillenebene (20) eines Mikroskops anpassbar ist.

6. Verfahrensanspruch 4 oder 5, wobei der erweiterte lichtempfindliche Erfassungsbereich (36) eine zweidimensionale Form aufweist, wobei die zweidimensionale Form vorzugsweise ein Quadrat, ein Rechteck, ein Polygon, ein Kreis oder eine Ellipse ist.

## Revendications

1. Dispositif d'étalonnage pour une procédure d'étalonnage pour au moins l'un des éléments suivants : imagerie à deux photons, imagerie multi-photons, microscopie à deux photons, microscopie multi-photons, imagerie par génération de deuxième harmonique, imagerie par génération de troisième harmonique, diffusion Raman anti-stokes cohérente (CARS), diffusion Raman Stokes cohérente (CSRS), diffusion Raman stimulée (SRS), imagerie par absorption à deux photons et deux couleurs ou imagerie par fluorescence à deux photons et deux couleurs ;
le dispositif (10) comprenant au moins un détecteur (32) et au moins un support (30) pour maintenir l'au moins un détecteur (32), l'au moins un détecteur (32) étant un dispositif à semi-conducteurs ayant une zone de détection photosensible étendue (36) comprenant un matériau semi-conducteur, la zone de détection photosensible étendue (36) étant plus grande que 1 mm dans une première direction et plus grande que 1 mm dans une seconde direction, la seconde direction étant perpendiculaire à la première direction,
la zone de détection sensible à la lumière étendue étant adaptée de telle sorte que la génération de deux photons, de multi-photons, de deuxième harmonique ou de troisième harmonique est excitée et/ou induite dans celle-ci et l'effet excité et/ou induit étant détecté avec celle-ci, **caractérisé en ce que**
le support (30) est adapté de telle sorte qu'il peut être monté sur un microscope (1) et le support (30) a une forme identique à une lame d'objet pouvant être montée sur une platine de microscope dudit microscope, et **en ce que**
le dispositif (10) comprend un dispositif d'évaluation configuré pour déterminer une matrice de retard, qui contient des valeurs pour des réglages d'un étage de retard du microscope en fonction de la position du foyer laser dans le champ de vision du microscope sur la base d'un signal électrique de l'au moins un détecteur (32), l'étage de retard étant configuré pour retarder des impulsions laser.

2. Dispositif d'étalonnage selon la revendication 1, le dispositif étant adaptable dans un plan objet (14) et/ou dans un plan image intermédiaire (20) et/ou dans un plan image (20) et/ou dans un plan de pupille (20) d'un microscope.

3. Dispositif d'étalonnage selon la revendication 1 ou 2, la zone de détection photosensible étendue (36) comprenant une forme bidimensionnelle, la forme bidimensionnelle étant de préférence un carré, un rectangle, un polygone, un cercle ou une ellipse.

4. Procédé d'étalonnage d'un microscope à balayage laser pour au moins un des éléments suivants :
l'imagerie à deux photons, l'imagerie multi-photons, la microscopie à deux photons, la microscopie multi-photons, l'imagerie par génération de deuxième harmonique, l'imagerie par génération de troisième harmonique, la diffusion Raman anti-Stokes cohérente (CARS), la diffusion Raman Stokes cohérente (CSRS), la diffusion Raman stimulée (SRS), l'imagerie par absorption à deux photons et deux couleurs ou l'imagerie par fluorescence à deux photons et deux couleurs ou tout autre effet non linéaire induit par la lumière ;
un dispositif d'étalonnage (10) étant utilisé comprenant au moins un détecteur (32) et au moins un support (30) pour maintenir l'au moins un détecteur (32), l'au moins un détecteur (32) étant un dispositif à semi-conducteurs ayant une zone de détection photosensible étendue (36) comprenant un matériau semi-conducteur, la zone de détection photosensible étendue (36) étant plus grande que 1 mm dans une première direction et plus grande que 1 mm dans une seconde direction, la seconde direction étant perpendiculaire à la première direction, la zone de détection sensible à la lumière étendue étant adaptée de telle sorte que la génération à deux photons, multi-photons, de deuxième harmonique ou de troisième harmonique excitée et/ou induite dans celle-ci et l'effet excité et/ou induit étant détecté avec celle-ci, **caractérisé en ce que**
le support (30) est adapté de telle sorte qu'il peut être monté sur un microscope (1) et le support (30) a une forme identique à une lame d'objet pouvant être montée sur une platine de microscope dudit microscope, et **en ce qu'**une matrice de retard est déterminée, qui contient des valeurs pour des réglages d'un étage de retard (22) du microscope (1) en fonction de la position du foyer laser dans le champ de vision du microscope (1) sur la base d'un signal électrique de l'au moins un détecteur (32), l'étage de retard (22) étant configuré pour retarder des impulsions laser.

5. Procédé selon la revendication 4, le dispositif d'étalonnage (10) étant adaptable dans un plan objet (14) et/ou dans un plan image intermédiaire (20) et/ou dans un plan image (20) et/ou dans un plan de pupille (20) d'un microscope.

6. Procédé selon la revendication 4 ou 5, la zone de détection photosensible étendue (36) comprenant une forme bidimensionnelle, la forme bidimensionnelle étant de préférence un carré, un rectangle, un polygone, un cercle ou une ellipse.
